# EUROPEAN PATENT APPLICATION

(11) **EP 1 571 177 A1**
(43) Date of publication of application: **07.09.2005**
(21) Application number: 04075662.9
(22) Date of filing: 03.03.2004
(51) Int. Cl.: C08K 5/3435, C08K 5/3462, C08K 5/3477

(54) **Elastomer with improved weather resistance**

(71) Applicant: DSM IP Assets B.V., 6411 TE Heerlen (NL)
(72) Inventor: Gijsman, Pieter, 6191 NM Beek (NL)
(74) Representative: Mooij, Johannes Jacobus

(57) **Abstract**

The invention relates to a composition containing a polymer and at least one hindered-amine light stabilizer (HALS), and a bridged amine compound having at least one N-bridgehead, characterized in that the polymer is an ethylene/α-olefin/nonconjugated polyene copolymer rubber a with a build in nonconjugated polyene amount of at least 1 % by weight with respect to the weight of the copolymer. The nonconjugated polyene is preferably 5-ethylidene-2-norbornene, vinylnorbornene, dicyclopentadiene or combinations thereof.

## Description

The invention relates to a composition containing a polymer, at least one hindered-amine light stabilizer (HALS), and a bridged amine compound having at least one N-bridgehead and in particular to a UV stable composition wherein the polymer is a rubber.

A composition containing a polymer, at least one HALS, and a bridged amine compound having at least one N-bridgehead is known from WO 98/36023. WO 98/36023 describes a synergistic effect of an HALS and a bridged amine compound having at least one N-bridgehead, wherein the polymer is chosen from propylene polymers, such as propylene homopolymer, ethylene-propylene random copolymer, ethylene-propylene block copolymer and mixtures hereof, also including mixtures containing at least 50% by weight of one of the aforementioned propylene polymers with, for example, polyethylene or ethylene-propylene-diene copolymers (EPDM). No disclosure was given for a synergistic effect in a copolymer rubber. A synergistic improvement of the UV stability by a HALS and a bridged amine compound for the elastomer described in WO 98/36023, being an ethylene-propylene random copolymer, could not be reproduced.

Surprisingly a synergistic improvement of the UV stability by a HALS and a bridged amine compound having at least one N-bridgehead, was found in a composition, wherein the polymer is an ethylene/α-olefin/nonconjugated polyene copolymer rubber with a build-in nonconjugated polyene content of at least 1 % by weight with respect to the weight of the copolymer.

Within the scope of this invention, a xenon test is employed as a measure of the UV-stability. The xenon test determines a composition's resistance to degradation when exposed to light from a filtered (borosilicate glass) xenon lamp at a black panel temperature of 63 °C having an intensity of 0.35 W·m⁻²·nm⁻¹, at a wavelength of 340 nm and a relative humidity of 55% by volume in a wet/dry cycle of 18 minutes wet and 102 minutes dry. The degradation of the composition is measured as the difference in the carbonyl absorption at 1713 cm⁻¹ and the absorption at 1860 cm⁻¹ as a function of the time for which the composition is subjected to said combination of light, temperature and humidity. The UV-stability is expressed as the time for which a composition is subjected to said combination of light, temperature and humidity and at which the difference between the measured carbonyl absorptions is less than a certain value to be chosen beforehand in the xenon test employed here, this value is 0.5 for the films of about 250 µm thickness.
'Hindered-amine light stabilizers' are understood to be compounds having the following general formulas: 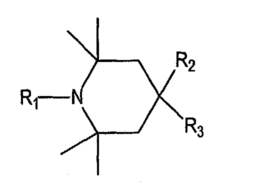 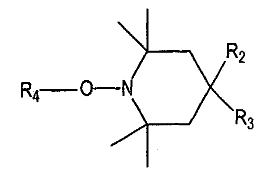 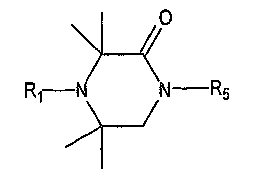 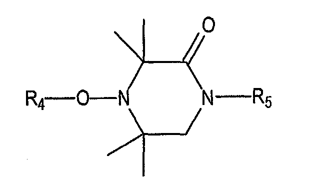 and combinations hereof.

R₁ up to and including R₅ are herein independent substituents; examples of suitable substituents are hydrogen, ether, ester, amine, amide, alkyl, alkenyl, alkynyl, aralkyl, cycloalkyl and aryl groups, which substituents may in turn contain functional groups; examples of functional groups are alcohols, ketones, anhydrides, imines, siloxanes, ethers, carboxyl groups, aldehydes, esters, amides, imides, amines, nitriles, ethers, urethanes and any combination thereof. A hindered-amine light stabilizer may also form part of a polymer.

Preferably, the HALS compound chosen is a compound derived from a substituted piperidine compound, in particular any compound which is derived from an alkyl-substituted piperidyl, piperidinyl or piperazinone compound and substituted alkoxypiperidinyl compounds. Examples of such compounds are:
2,2,6,6-tetramethyl-4-piperidone;
2,2,6,6-tetramethyl-4-piperidinol;
bis-(1,2,2,6,6-pentamethylpiperidyl)-(3',5'-di-tert-butyl-4'-hydroxybenzyl) butylmalonate; di-(2,2,6,6-tetramethyl-4-piperidyl) sebacate (Tinuvin® 770);
oligomer of N-(2-hydroxyethyl)-2,2,6,6-tetramethyl-4-piperidinol and succinic acid (Tinuvin® 622);
bis-(2,2,6,6-tetramethyl-4-piperidinyl) succinate;
bis-(1-octyloxy-2,2,6,6-tetramethyl-4-piperidinyl) sebacate (Tinuvin® 123); bis-(1,2,2,6,6-pentamethyl-4-piperidinyl) sebacate (Tinuvin® 765);
N,N'-bis-(2,2,6,6-tetramethyl-4-piperidyl) hexane-1,6-diamine (Chimassorb® T5); N-butyl-2,2,6,6-tetramethyl-4-piperidinamine;
2,2'-[(2,2,6,6-tetramethylpiperidinyl)imino]-bis-[ethanol];
poly((6-morpholine-S-triazine-2,4-diyl)(2,2,6,6-tetramethyl-4-piperidinyl)-
iminohexamethylene-(2,2,6,6-tetramethyl-4-piperidinyl)-imino) (Cyasorb® UV 3346); 5-(2,2,6,6-tetramethyl-4-piperidinyl)-2-cycloundecyloxazole) (Hostavin® N20);
8-acetyl-3-dodecyl-7,7,9,9-tetramethyl-1,3,8-triazaspiro(4,5)decane-2,4-dione;
polymethylpropyl-3-oxy[4(2,2,6,6-tetramethyl)piperidinyl)siloxane (Uvasil® 299);
copolymer of α-methylstyrene-N-(2,2,6,6-tetramethyl-4-piperidinyl)maleimide and N-stearylmaleimide;
1,2,3,4-butanetetracarboxylic acid, polymer with beta, beta, beta',beta'-tetramethyl-2,4,8,10-tetraoxaspiro[5.5]undecane-3,9-diethanol, 1,2,2,6,6-pentamethyl-4-piperidinyl ester (Mark® LA63)
2,4,8,10-tetraoxaspiro[5.5]undecane-3,9-diethanol,beta,beta,beta',beta'-tetramethyl-, polymer with 1,2,3,4-butanetetracarboxylic acid, 2,2,6,6-tetramethyl-4-piperidinyl ester (Mark^{R} LA68)
D-glucitol, 1,3:2,4-bis-O-(2,2,6,6-tetramethyl-4-piperidinylidene)- (HALS 7)
oligomer of 7-oxa-3,20-diazadispiro[5.1.11.2]heneicosan-21-one,2,2,4,4-tetramethyl-20-(oxiranylmethyl) (Hostavin® N30)
propanedioic acid, [(4-methoxyphenyl)methylene] -,bis(1,2,2,6,6-pentamethyl-4-piperidinyl) ester (Sanduvor® PR 31)
formamide, N,N'-1,6-hexanediylbis[N-(2,2,6,6-tetramethyl-4-piperidinyl (Uvinul® 4050H).
1,3,5-triazine-2,4,6-triamine, N,N'''-[1,2-ethanediylbis [[[4,6-bis[butyl(1,2,2,6,6-pentamethyl-4-iperidinyl)amino]-1,3,5-triazine-2-yl]imino]-3,1-propanediyl]]-bis[N',N''-dibutyl-N',N"-bis(1,2,2,6,6-pentamethyl-4-piperidinyl) (Chimassorb® 119)
1,5-dioxaspiro (5,5) undecane 3,3-dicarboxylic acid, bis (2,2,6,6-tetramethyl-4-peridinyl) ester (Cyasorb® UV-500)
1,5-dioxaspiro (5,5) undecane 3,3-dicarboxylic acid, bis (1,2,2,6,6-pentamethyl-4-peridinyl) ester (Cyasorb^{R} UV-516)
N-2,2,6,6-tetramethyl-4-piperidinyl-N-amino-oxamide;
4-acryloyloxy-1,2,2,6,6-pentamethyl-4-piperidine;
HALS PB-41 (Clariant Huningue S.A.)
1,3-benzendicarboxamide,N,N'-bis(2,2,6,6-tetramethyl-4-piperidinyl) (Nylostab® S-EED (Clariant Huningue S.A.))
3-dodecyl-1-(2,2,6,6-tetramethyl-4-piperidyl)-pyrrolidin-2,5-dione
1,3-Propanediamine, N, N-1,2-ethanediylbis-, polymer with 2,4,6-trichloro-1,3,5-triazine, reaction products with N-butyl-2,2,6,6-tetramethyl-4-piperidinamine (Uvasorb® HA88)
1,1'-(1,2-ethane-di-yl)-bis-(3,3',5,5'-tetra-methyl-piperazinone) (Good-rite® 3034)
1,1',1''-(1,3,5-triazine-2,4,6-triyltris ((cyclohexylimino)-2,1-ethanediyl)tris(3,3,5,5-tetramethylpiperazinone); (Good-rite® 3150)
1,1',1''-(1,3,5-triazine-2,4,6-triyltris((cyclohexylimino)-2,1-ethanediyl)tris(3,3,4,5,5-tetramethylpiperazinone) (Good-rite® 3159)
1,2,3,4-Butanetetracarboxylic acid, tetrakis(2,2,6,6-tetramethyl-4-piperidinyl) ester (ADK STAB® LA-57) 1,2,3,4-Butane-tetra-carboxyllc acid, 1,2,3-tris-(1,2,2,6,6-pentamethyl-4-piperidyl)-4-tridecylester (ADK STAB® LA-62)
Mixture of esters of 2,2,6,6-tetra-methyl-4-pipiridinol and several fatty acid (CYASORB® UV3853)
Propanedioic acid, [(4-methoxyphenyl)methylene]-,bis(2,2,6,6-tetramethyl-4-piperidinyl) ester (HOSTAVIN® PR-31)
3-Dodecyl-1-(2,2,6,6-tetramethyl-4-piperidyl)-pyrrolidin-2,5-dione (CYASORB® UV3581)
3-Dodecyl-1-(1,2,2,6,6-pentamethyl-4-piperidyl)-pyrrolidin-2,5-dione (CYASORB® UV3641)
1,2,3,4-Butanetetracarboxylic acid, tetrakis(1,2,2,6,6-pentamethyl-4-piperidinyl)ester (ADK STAB@ LA-52)
1,2,3,4-Butane-tetra-carboxyllc acid, 1,2,3-tris-(2,2,6,6-tetra-methyl-4-piperidyl)-4-tridecylester (ADK STAB® LA-67) Mixture of: 2,2,4,4 tetramethyl-21-oxo-7-oxa-3.20-diazadispiro[5.1.11.2]- heneicosane-20-propionic acid dodecylester and 2,2,4,4 tetramethyl-21-oxo-7-oxa-3.20-diazadispiro[5.1.11.2]-heneicosane-20-propionicacid tetradecylester (Hostavin® N24)
Poly[[6-[(1,1,3,3-tetramethylbutyl)amino]-s-triazine-2,4-diyl][2,2,6,6-tetramethyl-4-piperidinyl)-imino]hexamethylene [(2,2,6,6-tetramethyl-4-piperidinyl) imino]]} (Chimassorb® 944);
1,3,5-Triazine-2,4,6-triamine, N,N'''-[1,2-ethanediylbis [[[4,6-bis[butyl(1,2,2,6,6-pentamethyl-4-piperidinyl)amino]-1,3,5-triazine-2-yl]imino]-3,1-propanediyl]]-bis[N',N''-dibutyl-N',N''-bis(1,2,2,6,6-pentamethyl-4-piperidinyl) (Chimassorb® 119);
Poly[(6-morpholino-s-triazine-2,4-diyl)[1,2,2,6,6-penta-methyl-4-piperidyl)imino]-hexamethylene[(1,2,2,6,6 penta-methyl-4-piperidyl)imino]]1,6-Hexanediamine, N,N'-bis(1,2,2,6,6-pentamethyl-4-pipiridinyl)-, Polymers with morpholine-2,4,6-trichloro-1,3,5-triazine (CYASORB® UV3529)
Poly-methoxypopyl-3-oxy[4(1,2,2,6,6-pentamethyl)-piperidinyl]-siloxane (Uvasil®816)
1,6-Hexanediamine, N, N'-bis(2,2,6,6-tetramethyl-4piperidinyl)-polymer with 2,4,6-trichloro-1,3,5-triazine, reaction products with N-butyl-1-butanamine and N-butyl-2,2,6,6-tetramethyl-4-piperidinamine (Chimassorb® 2020)
Reaction products of N, N'-ethane -1,2-diylbis (1,3-propanediamine), cyclohexane, peroxidized 4-butylamino-2,2,6,6-tetramethylpiperidine and 2,4,6-trichloro-1,3,5-triazine (Flamestab NOR@ 116)
1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated (Tinuvin NOR® 371)

Preferably use is made of
di-(2,2,6,6-tetramethyl-4-piperidyl) sebacate (Tinuvin® 770);
oligomer of N-(2-hydroxyethyl)-2,2,6,6-tetramethyl-4-piperidinol and succinic acid (Tinuvin® 622);
bis-(2,2,6,6-tetramethyl-4-piperidinyl) succinate;
bis-(1-octyloxy-2,2,6,6-tetramethyl-4-piperidinyl) sebacate (Tinuvin® 123); bis-(1,2,2,6,6-pentamethyl-4-piperidinyl) sebacate (Tinuvin® 765);
N,N'-bis-(2,2,6,6-tetramethyl-4-piperidyl) hexane-1,6-diamine (Chimassorb® T5);
poly((6-morpholine-S-triazine-2,4-diyl)(2,2,6,6-tetramethyl-4-piperidinyl)-iminohexamethylene-(2,2,6,6-tetramethyl-4-piperidinyl)-imino) (Cyasorb® UV 3346);
5-(2,2,6,6-tetramethyl-4-piperidinyl)-2-cycloundecyloxazole) (Hostavin® N20);
8-acetyl-3-dodecyl-7,7,9,9-tetramethyl-1,3,8-triazaspiro(4,5)decane-2,4-dione;
polymethylpropyl-3-oxy[4(2,2,6,6-tetramethyl)piperidinyl)siloxane (Uvasil® 299);
copolymer of α-methylstyrene-N-(2,2,6,6-tetramethyl-4-piperidinyl)maleimide and N-stearylmaleimide;
1,2,3,4-butanetetracarboxylic acid, polymer with beta, beta, beta',beta'-tetramethyl-2,4,8,10-tetraoxaspiro[5.5]undecane-3,9-diethanol, 1,2,2,6,6-pentamethyl-4-piperidinyl ester (Mark® LA63)
2,4,8,10-tetraoxaspiro[5.5]undecane-3,9-diethanol,beta,beta,beta',beta'-tetramethyl-,
polymer with 1,2,3,4-butanetetracarboxylic acid, 2,2,6,6-tetramethyl-4-piperidinyl ester (Mark^{R} LA68)
oligomer of 7-oxa-3,20-diazadispiro[5.1.11.2]heneicosan-21-one,2,2,4,4-tetramethyl-20-(oxiranylmethyl) (Hostavin® N30)
propanedioic acid, [(4-methoxyphenyl)methylene] -,bis(1,2,2,6,6-pentamethyl-4-piperidinyl) ester (Sanduvor® PR 31)
formamide, N,N'-1,6-hexanediylbis[N-(2,2,6,6-tetramethyl-4-piperidinyl (Uvinul® 4050H).
1,3,5-triazine-2,4,6-triamine, N,N'''-[1,2-ethanediylbis [[[4,6-bis[butyl(1,2,2,6,6-pentamethyl-4-iperidinyl)amino]-1,3,5-triazine-2-yl]imino]-3,1-propanediyl]]-bis[N',N''-dibutyl-N',N"-bis(1,2,2,6,6-pentamethyl-4-piperidinyl) (Chimassorb® 119)
1,5-dioxaspiro (5,5) undecane 3,3-dicarboxylic acid, bis (2,2,6,6-tetramethyl-4-peridinyl) ester (Cyasorb® UV-500)
1,5-dioxaspiro (5,5) undecane 3,3-dicarboxylic acid, bis (1,2,2,6,6-pentamethyl-4-peridinyl) ester (Cyasorb^{R} UV-516)
4-acryloyloxy-1,2,2,6,6-pentamethyl-4-piperidine;
1,3-benzendicarboxamide,N,N'-bis(2,2,6,6-tetramethyl-4-piperidinyl) (Nylostab® S-EED (Clariant Huningue S.A.))
3-dodecyl-1-(2,2,6,6-tetramethyl-4-piperidyl)-pyrrolidin-2,5-dione
1,3-Propanediamine, N, N-1,2-ethanediylbis-, polymer with 2,4,6-trichloro-1,3,5-triazine, reaction products with N-butyl-2,2,6,6-tetramethyl-4-piperidinamine (Uvasorb® HA88)
1, 1'-(1,2-ethane-di-yl)-bis-(3,3',5,5'-tetra-methyl-piperazinone) (Good-rite@ 3034)
1,1',1''-(1,3,5-triazine-2,4,6-triyltris ((cyclohexylimino)-2,1-ethanediyl)tris(3,3,5,5-tetramethylpiperazinone); (Good-rite@ 3150)
1,1',1''-(1,3,5-triazine-2,4,6-triyltris((cyclohexylimino)-2,1-ethanediyl)tris(3,3,4,5,5-tetramethylpiperazinone) (Good-rite@ 3159)
1,2,3,4-Butanetetracarboxylic acid, tetrakis(2,2,6,6-tetramethyl-4-piperidinyl) ester (ADK STAB@ LA-57) 1,2,3,4-Butane-tetra-carboxyllc acid, 1,2,3-tris-(1,2,2,6,6-pentamethyl-4-piperidyl)-4-tridecylester (ADK STAB@ LA-62)
Mixture of esters of 2,2,6,6-tetra-methyl-4-pipiridinol and several fatty acid (CYASORB® UV3853)
Propanedioic acid, [(4-methoxyphenyl)methylene]-,bis(2,2,6,6-tetramethyl-4-piperidinyl) ester (HOSTAVIN® PR-31)
3-Dodecyl-1-(2,2,6,6-tetramethyl-4-piperidyl)-pyrrolidin-2,5-dione (CYASORB® UV3581)
3-Dodecyl-1-(1,2,2,6,6-pentamethyl-4-piperidyl)-pyrrolidin-2,5-dione (CYASORB® UV3641)
1,2,3,4-Butanetetracarboxylic acid, tetrakis(1,2,2,6,6-pentamethyl-4-piperidinyl)ester (ADK STAB® LA-52)
1,2,3,4-Butane-tetra-carboxyllc acid, 1,2,3-tris-(2,2,6,6-tetra-methyl-4-piperidyl)-4-tridecylester (ADK STAB® LA-67) Mixture of: 2,2,4,4 tetramethyl-21-oxo-7-oxa-3.20-diazadispiro[5.1.11.2]- heneicosane-20-propionic acid dodecylester and 2,2,4,4 tetramethyl-21-oxo-7-oxa-3.20-diazadispiro[5.1.11.2]-heneicosane-20-propionicacid tetradecylester (Hostavin® N24)
Poly[[6-[(1,1,3,3-tetramethylbutyl)amino]-s-triazine-2,4-diyl][2,2,6,6-tetramethyl-4-piperidinyl)-imino]hexamethylene [(2,2,6,6-tetramethyl-4-piperidinyl) imino]]} (Chimassorb® 944);
1,3,5-Triazine-2,4,6-triamine, N,N'''-[1,2-ethanediylbis [[[4,6-bis[butyl(1,2,2,6,6-pentamethyl-4-piperidinyl)amino]-1,3,5-triazine-2-yl]imino]-3,1-propanediyl]]-bis[N',N''-dibutyl-N',N''-bis(1,2,2,6,6-pentamethyl-4-piperidinyl) (Chimassorb® 119);
Poly[(6-morpholino-s-triazine-2,4-diyl)[1,2,2,6,6-penta-methyl-4-piperidyl)imino]-hexamethylene[(1,2,2,6,6 penta-methyl-4-piperidyl)imino]]1,6-Hexanediamine, N,N'-bis(1,2,2,6,6-pentamethyl-4-pipiridinyl)-, Polymers with morpholine-2,4,6-trichloro-1,3,5-triazine (CYASORB® UV3529)
1,6-Hexanediamine, N, N'-bis(2,2,6,6-tetramethyl-4piperidinyl)-polymer with 2,4,6-trichloro-1,3,5-triazine, reaction products with N-butyl-1-butanamine and N-butyl-2,2,6,6-tetramethyl-4-piperidinamine (Chimassorb® 2020)
Reaction products of N, N'-ethane -1,2-diylbis (1,3-propanediamine), cyclohexane, peroxidized 4-butylamino-2,2,6,6-tetramethylpiperidine and 2,4,6-trichloro-1,3,5-triazine (Flamestab NOR@ 116)
1,6-hexanediamine, N,N'-bis(2,2,6,6-tetramethyl -4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated (Tinuvin NOR® 371)

Most preferred HALS compounds are
di-(2,2,6,6-tetramethyl-4-piperidyl) sebacate (Tinuvin® 770);
bis-(1-octyloxy-2,2,6,6-tetramethyl-4-piperidinyl) sebacate (Tinuvin® 123); bis-(1,2,2,6,6-pentamethyl-4-piperidinyl) sebacate (Tinuvin® 765);
N,N'-bis-(2,2,6,6-tetramethyl-4-piperidyl) hexane-1,6-diamine (Chimassorb® T5);
poly((6-morpholine-S-triazine-2,4-diyl)(2,2,6,6-tetramethyl-4-piperidinyl)-5-(2,2,6,6-tetramethyl-4-piperidinyl)-2-cycloundecyloxazole) (Hostavin® N20);
8-acetyl-3-dodecyl-7,7,9,9-tetramethyl-1,3,8-triazaspiro(4,5)decane-2,4-dione;
polymethylpropyl-3-oxy[4(2,2,6,6-tetramethyl)piperidinyl)siloxane (Uvasil® 299);
formamide, N,N'-1,6-hexanediylbis[N-(2,2,6,6-tetramethyl-4-piperidinyl (Uvinul® 4050H).
1,5-dioxaspiro (5,5) undecane 3,3-dicarboxylic acid, bis (2,2,6,6-tetramethyl-4-peridinyl) ester (Cyasorb® UV-500)
1,5-dioxaspiro (5,5) undecane 3,3-dicarboxylic acid, bis (1,2,2,6,6-pentamethyl-4-peridinyl) ester (Cyasorb^{R} UV-516)
4-acryloyloxy-1,2,2,6,6-pentamethyl-4-piperidine;
1,3-benzendicarboxamide,N,N'-bis(2,2,6,6-tetramethyl-4-piperidinyl) (Nylostab® S-EED (Clariant Huningue S.A.))
3-dodecyl-1-(2,2,6,6-tetramethyl-4-piperidyl)-pyrrolidin-2,5-dione
1,1'-(1,2-ethane-di-yl)-bis-(3,3',5,5'-tetra-methyl-piperazinone) (Good-rite® 3034)
1,1',1''-(1,3,5-triazine-2,4,6-triyltris ((cyclohexylimino)-2,1-ethanediyl)tris(3,3,5,5-tetramethylpiperazinone); (Good-rite@ 3150)
1,1',1''-(1,3,5-triazine-2,4,6-triyltris((cyclohexylimino)-2,1-ethanediyl)tris(3,3,4,5,5-tetramethylpiperazinone) (Good-rite@ 3159)
1,2,3,4-Butanetetracarboxylic acid, tetrakis(2,2,6,6-tetramethyl-4-piperidinyl) ester (ADK STAB® LA-57)
1,2,3,4-Butane-tetra-carboxyllc acid, 1,2,3-tris-(1,2,2,6,6-penta-methyl-4-piperidyl)-4-tridecylester (ADK STAB® LA-62)
Mixture of esters of 2,2,6,6-tetra-methyl-4-pipiridinol and several fatty acid (CYASORB® UV3853)
Propanedioic acid, [(4-methoxyphenyl)methylene]-,bis(2,2,6,6-tetramethyl-4-piperidinyl) ester (HOSTAVIN® PR-31)
3-Dodecyl-1-(2,2,6,6-tetramethyl-4-piperidyl)-pyrrolidin-2,5-dione (CYASORB® UV3581)
3-Dodecyl-1-(1,2,2,6,6-pentamethyl-4-piperidyl)-pyrrolidin-2,5-dione (CYASORB® UV3641)
1,2,3,4-Butanetetracarboxylic acid, tetrakis(1,2,2,6,6-pentamethyl-4-piperidinyl)ester (ADK STAB® LA-52)
1,2,3,4-Butane-tetra-carboxyllc acid, 1,2,3-tris-(2,2,6,6-tetra-methyl-4-piperidyl)-4-tridecylester (ADK STAB® LA-67)
1,6-hexanediamine, N,N'-bis(2,2,6,6-tetramethyl-4-piperidinyl)-, polymer with 2,4,6-trichloro-1,3,5-triazine, reaction products with 3-bromo-1-propene, n-butyl-1-butanamine and N-butyl-2,2,6,6-tetramethyl-4-piperidinamine, oxidised, hydrogenated (Tinuvin NOR® 371

The bridged amine compound having at least one N-bridgehead that can be used within the scope of this invention is preferably a compound derived from a compound having the general formula 1 or 2 (see formula sheet), where M₁ to M₄ are bridgeheads and each bridgehead is chosen independently of one another from carbon, nitrogen, silicon or phosphorus, with the proviso that at least one bridgehead should always be a nitrogen atom and carbon and silicon may be substituted; an N-bridgehead is defined as a bridgehead which is a nitrogen atom; Dₗ, Dₘ, Dₙ, Dₒ, Dₚ and Dq here each stand for a chain having a length of 1 to 20 atoms, the number of atoms of which the chains are made up being equal to I, m, n, o, p and q, each number of atoms and type of atom to be chosen independently of one another, and the chains being capable of having different lengths and being capable of being made up of different types of atoms. The chains may also contain side groups, the number of atoms in the side groups not being included in the number of atoms of the chain. Suitable choices for the atoms of which the chains are made up are carbon, nitrogen, oxygen, silicon and phosphorus. Preferably the chains are made up of 1 to 3 carbon atoms.

Preferably the bridged amine compound having at least one N-bridgehead is used with a HALS compound in a ratio, relative to the amount of HALS compound, of between approximately 1:20 (m:m) and approximately 20:1 (m:m), more preferably in a ratio of between approximately 1:10 (m:m) and approximately 10:1 (m:m), most preferably in a ratio of between approximately 1:5 (m:m) and approximately 5:1 (m:m). Within the limits of the latter ratios the weather resistance is better than is expected on the basis of the amounts of the bridged amine compound having at least one N-bridgehead and the HALS compound present.

The amount of bridged amine compound having at least one N-bridgehead that can be used in the composition may vary within a wide range, which can be easily determined by an average person skilled in the art. The range may vary depending on for example the type of polymer, the type of HALS compound, the other additives in the additives package, the weather resistance to be realized or in general the type of composition, its properties and its specific application.

It is for example possible for the bridged amine compound having at least one N-bridgehead to be present in the composition in an amount, relative to the amount of polymer in the composition, of, preferably, between approximately 0.01 % by weight and approximately 10.0% by weight, more preferably in an amount of between 0.05% by weight and 5% by weight, most preferably in an amount of between 0.1% by weight and 2.5% by weight.

Preferably the bridged amine compound having at least one N-bridgehead is chosen so that a composition is obtained having a weather resistance measured with the aid of the xenon test which is higher than approximately 500 hours, more preferably higher than approximately 750 hours, and most preferably higher than approximately 1000 hours.

Preferably the bridged amine compound having at least one N-bridgehead are compounds comprising the following general structures: 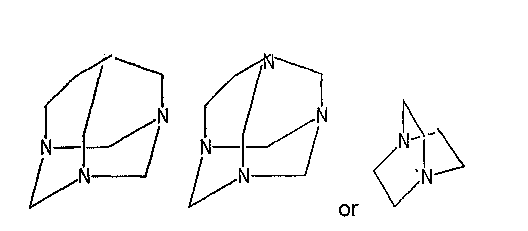 Preferably, compounds comprising these structures are:
- derivatives of 7-nitro-1,3,5-triazadamantane and 7-amino-1,3,5-triazadamantane,
- derivatives of 7-amino-1,3,5-triazadamantane - derivatives obtained in a reaction of 7-amino-1,3,5-triazadamantane with compounds containing one or more functional groups. Examples of these functional groups are: aldehydes, acids, esters, amides, ketones, anhydrides and isocyanates.
- triazadamantane derivatives that are bound to a polymer with the aid of an imide functionality;
- polymer-bound compounds obtained by the reaction of 7-amino-1,3,5-triazadamantane with a polymer functionalized with maleic anhydride;
- hexamethylenetetramine (HMTA), diazabicyclo[2.2.2]octane (DABCO) or derivatives thereof. Hexamethylenetetramine (HMTA) and diazabicyclo[2.2.2]octane (DABCO) are easy to obtain commercially or are easy to prepare using generally known processes. HMTA, for example, can easily be prepared from the cheap and easily obtainable basic raw materials ammonia and formaldehyde.

The bridged amine compound having at least one N-bridgehead is preferably used as a salt, more preferably as an ammonium salt. Preferably a carboxylic acid is chosen as the salt-forming agent. Examples of suitable carboxylic acids are aliphatic carboxylic acids, aliphatic dicarboxylic acids and aromatic carboxylic acids. Suitable choices are stearic acid, sebacic acid, cyclohexanedicarboxylic acid and benzenetricarboxylic acid. Preferably the bridged amine compound having at least one N-bridgehead is not used as a salt if the salt-forming agent contains a halogen or sulphur, for it is generally known that halogen-containing or sulphur-containing compounds can reduce the effect of the HALS stabilizer.

The bridged amine compound having at least one N-bridgehead is preferably substituted with at least one substituent having a molecular weight of preferably at least 50, more preferably at least 100.

Surprisingly, it has been found that, as a result of using the bridged amine compound having at least one N-bridgehead either in its salt form, or substituted with at least one substituent having a molecular weight greater than approximately 50, or in its salt form and substituted with at least one substituent having a molecular weight greater than approximately 50, a composition is obtained which has still better weather resistance.

The composition according to the invention contains an ethylene/α-olefin/nonconjugated polyene copolymer rubber. Examples of the α-olefins include propylene, 1-butene, 1-pentene, 1-hexene, 1-heptene, 1-octene, 1-nonene, 1-decene, 1-undecene, 1-dodecene, 1-tridecene, 1-tetradecene, 1-pentadecene, 1-hexadecene, 1-heptadecene, 1-octadecene, 1-nonadecene, 1-eicosene, 3-methyl-1-butene, 3-methyl-1-pentene, 3-ethyl-1-pentene, 4-methyl-1-pentene, 4-methyl-1-hexene, 4,4-dimethyl-1-hexene, 4,4-dimethyl-1-pentene, 4-ethyl-1-hexene, 3-ethyl-1-hexene, 9-methyl-1-decene, 11-methyl-1-dodecene and 12-ethyl-1-tetradecene. These α-olefins may be used in combination. Of these α-olefins particularly propylene, 1-butene, 1-hexene and 1-octene, are preferred as the α-olefins for forming the ethylene/α-olefin/nonconjugated polyene copolymer rubber.

The composition according to the invention contains an ethylene-propylene-diene-copolymer with a build-in nonconjugated polyene content of at least 1 % by weight with respect to the weight of the copolymer.

Generally nonconjugated polyenes include aliphatic polyenes and alicyclic polyenes. More specifically, there can be mentioned aliphatic polyenes such as: 1,4-hexadiene, 3-methyl-1,4-hexadiene, 4-methyl-1,4-hexadiene, 5-methyl-1,4-hexadiene, 4-ethyl-1,4-hexadiene, 3-methyl-1,5-hexadiene, 3,3-dimethyl-1,4-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 1,6-octadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1,7-decadiene, 8-methyl-1,8-decadiene, 9-methyl-1,8-decadiene, 8-ethyl-1,8-decadiene, 6-methyl-1,6-undecadiene and 9-methyl-1,8-undecadiene.

Preferred alicyclic polyenes are those consisting of alicyclic parts having one unsaturated bond and chain parts having inside olefinic bond, and examples thereof include 5-ethylidene-2-norbornene, 5-isopropylidene-2-norbornene and 6-chloromethyl-5-isopropenyl-2-norbornene. Also employable are trienes such as 2,3-diisopropylidene-5-norbornene and 2-ethylidene-3-isopropylidene-5-norbornene. Of the above nonconjugated polyenes, particularly preferable is 5-ethylidene-2-norbornene.

Further examples of the nonconjugated polyenes include aliphatic polyenes, alicyclic polyenes and aromatic polyenes. Particular examples of the aliphatic polyenes include: 1,4-hexadiene, 1,5-hexadiene, 1,6-heptadiene, 1,6-octadiene, 1,7-octadiene, 1,8-nonadiene, 1,9-decadiene, 1,13-tetradecadiene, 1,5,9-decatriene, 3-methyl-1,4-hexadiene, 4-methyl-1,4-hexadiene, 5-methyl-1,4-hexadiene, 4-ethyl-1,4-hexadiene, 3-methyl-1,5-hexadiene, 3,3-dimethyl-1,4-hexadiene, 3,4-dimethyl-1,5-hexadiene, 5-methyl-1,4-heptadiene, 5-ethyl-1,4-heptadiene, 5-methyl-1,5-heptadiene, 6-methyl-1,5-heptadiene, 5-ethyl-1,5-heptadiene, 3-methyl-1,6-heptadiene, 4-methyl-1,6-heptadiene, 4,4-dimethyl-1,6-heptadiene, 4-ethyl-1,6-heptadiene, 4-methyl-1,4-octadiene, 5-methyl-1,4-octadiene, 4-ethyl-1,4-octadiene, 5-ethyl-1,4-octadiene, 5-methyl-1,5-octadiene, 6-methyl-1,5-octadiene, 5-ethyl-1,5-octadiene, 6-ethyl-1,5-octadiene, 6-methyl-1,6-octadiene, 7-methyl-1,6-octadiene, 6-ethyl-1,6-octadiene, 6-propyl-1,6-octadiene, 6-butyl-1,6-octadiene, 4-methyl-1,4-nonadiene, 5-methyl-1,4-nonadiene, 4-ethyl-1,4-nonadiene, 5-ethyl-1,4-nonadiene, 5-methyl-1,5-nonadiene, 6-methyl-1,5-nonadiene, 5-ethyl-1,5-nonadiene, 6-ethyl-1,5-nonadiene, 6-methyl-1,6-nonadiene, 7-methyl-1,6-nonadiene, 6-ethyl-1,6-nonadiene, 7-ethyl-1,6-nonadiene, 7-methyl-1,7-nonadiene, 8-methyl-1,7-nonadiene, 7-ethyl-1,7-nonadiene, 5-methyl-1,4-decadiene, 5-ethyl-1,4-decadiene, 5-methyl-1,5-decadiene, 6-methyl-1,5-decadiene, 5-ethyl-1,5-decadiene, 6-ethyl-1,5-decadiene, 6-methyl-1,6-decadiene, 6-ethyl-1,6-decadiene, 7-methyl-1,6-decadiene, 7-ethyl-1,6-decadiene, 7-methyl-1,7-decadiene, 8-methyl-1,7-decadiene, 7-ethyl-1,7-decadiene, 8-ethyl-1, 7-decadiene, 8-methyl-1,8-decadiene, 9-methyl-1,8-decadiene, 8-ethyl-1,8-decadiene, 6-methyl-1,6-undecadiene and 9-methyl-1,8-undecadiene.
Particular examples of the alicyclic polyenes include: vinylcyclohexene, vinylnorbornene, ethylidene norbornene, dicyclopentadiene, cyclooctadiene, 2,5-norbornadiene, 1,4-divinylcyclohexane, 1,3-divinylcyclohexane, 1,3-divinylcyclopentane, 1,5-divinylcyclooctane, 1-allyl-4-vinylcyclohexane, 1,4-diallylcyclohexane, 1-allyl-5-vinylcycloocatane, 1,5-diallylcyclooctane, 1-allyl-4-isopropenylcyclohexane, 1-isopropenyl-4-vinylcyclohexane and 1-isopropenyl-3-vinylcyclopentane. Particular examples of the aromatic polyenes include divinylbenzene and vinylisopropenylbenzene.

Of these, a particular strong synergistic effect of an HALS and a bridged amine compound having at least one N-bridgehead is found for an ethylidene norbornene (ENB) such as 5-ethylidene-2-norbornene, vinylnorbornene (VNB) and dicyclopentadiene (DCPD). These nonconjugated polyenes can be used singly or in combination of two or more.

The nonconjugated polyene content in the rubber is at least 1 % by weight with respect to the weight of the copolymer. Below 1 % by weight no synergistic effect is observed. An upper limit of the amount of the nonconjugated polyene is generally 15 % by weight for economic reasons.

The bridged amine compound having at least one N-bridgehead can be introduced into the composition with the aid of one of the many standard methods known to a person skilled in the art at any desired time before making an article, for example a moulded part, sheet, film, fibre, coating, foam, tape, latex or powder, from the composition.

According to a first method, the bridged amine compound having at least one N-bridgehead is mixed, for example in the form of a powder, solution, emulsion or suspension, with the other components of the composition which are in the form of, for example, a powder or a melt.

According to a second method, the bridged amine compound having at least one N-bridgehead is first mixed with at least one HALS compound and optionally with other additives in a so-called additives package, for example in the form of a powder, solution, emulsion or suspension, and said package is then added to the polymer, for example in the form of a powder or as a melt.

The composition containing a polymer, at least one HALS compound and at least one bridged amine compound having at least one N-bridgehead may also contain other additives, for example antioxidants, thermal and UV stabilizers, metal deactivators, fillers, pigments, flame retardants, optical whiteners and similar additives which are used in compositions. The composition of the invention is particular suitable for a composition without carbon black. Preferably the composition comprises treated or untreated whitings, talcum, silicas, silicates, mica, or one or more clays.

The invention will be explained further by reference to the examples without being limited hereto.

### Examples

The following general processes were followed in the examples.

### Preparation of the various bridged amines

### Bridged amine A:

7-Dodecylideneamino-1,3,5-triazadamantane 8.4 grams of 7-amino-1,3,5-triazadamantane, 10.0 grams of dodecanal, 85 ml of methanol, 10 ml of toluene and 2.0 grams of wet Raney Cobalt catalyst were introduced into a Parr autoclave (160 ml capacity) fitted with a stirrer and baffles. The reaction was carried out for an hour in a nitrogen atmosphere (0.2 MPa) at max. speed and 80□C. After the catalyst had been removed through filtration the filtrate was evaporated with a rotavapor and dried in a vacuum dryer.
Bridged Amine B: HMTA (hexamethylene tetramine, 1,3,5,7-Tetra-azatricyclo 3.3.1.1^{3,7})decane).
   Bridged Amine B was bought from Aldrich
Bridged Amine C: DABCO stearate
   A solution of 28.45 grams (0.1 mol) of stearic acid in ethanol was added, drop by drop, with stirring, to a solution of 11.2 grams (0.1 Mol) of diazabicyclo[2.2.2]-octane (DABCO) in ethanol. The mixture was concentrated by evaporation with the aid of a film evaporator.
Bridged Amine D: HMTA stearate.
   A solution of 28.45 grams (0.1 mol) of stearic acid in ethanol was added, drop by drop, with stirring, to a solution of 14 grams (0.1 Mol) of Hexamethylenetetramine (1,3,5,7-Tetraazatricyclo(3.3.1.1^{3,7})decane) (HMTA) in ethanol. The mixture was concentrated by evaporation with the aid of a film evaporator.

### Polymers used:

An EPR (Keltan 7006) and four types of EPDM copolymerised with different types and amounts of diene were used, EPDM-1: 9% 5-Ethylidene-2-norbornene (ENB) (Keltan 4703), EPDM-2: 4.3% ENB
(Keltan 4802)
EPDM-3: 2.0% ENB
EPDM-4: 4.5% dicyclopentadiene (DCPD) (Keltan 820).

### HALS used:

As HALS Tinuvin® 770 from Ciba Specialty Chemicals was used

### Preparation of the polymer compositions

The different additives (bridged amines and HALS) were added to 5wt% solutions of the different polymers in distilled THF. These solutions were poured in petri dishes and the solvent was evaporated under a nitrogen flow. The thickness of the films made was typically 250µm.

### Determination of the weather resistance

The weather resistances of the polymer compositions were determined in a weather resistance test, carried out in an Atlas Material Testing Technology Weather-O meter (type Ci65) according to ASTM-G26 with the following settings:

| | |
|---|---|
| Black panel temperature (°C) | 63 |
| Intensity at 340 nm (W/m2/nm) | 0.35 |
| Raincycle (dry/wet) (min/min) | 102/18 |
| Relative humidity in the dry period (%) | 55 |

The degradation was measured with the aid of FT-IR. The weather resistance is expressed as the time (subjected to the aforementioned combination of light, temperature and humidity) required to reach a carbonyl absorbance increase of 0.5.

### Comparative experiments EPR (I-V)

| | Polymer | Type and amount HALS | Type and amount bridges amine | Weather resistance (hrs) |
|---|---|---|---|---|
| I | EPR | 0.2% Tinuvin 770 | | 1900 |
| II | EPR | 0.2% Tinuvin 770 | 0.5% A | 1700 |
| III | EPR | 0.2% Tinuvin 770 | 0.5% B | 1800 |
| IV | EPR | 0.2% Tinuvin 770 | 0.5% C | 1900 |
| V | EPR | 0.2% Tinuvin 770 | 0.5% D | 1700 |

For EPRs the addition of Bridged amines A-D does not result in an increase of the weathering resistance.

### Comparative Experiments (VI-XIV) and supporting (A-G) Examples (EPDM-1, 9% ENB).

| | Polymer | Type and amount HALS | Type and amount bridged amine | Weather resistance (hrs) |
|---|---|---|---|---|
| VI | EPDM-1 | | | 75-80 |
| VII | EPDM-1 | 0.1% Tinuvin 770 | | 290 |
| VIII | EPDM-1 | | 0.2% A | 80 |
| IX | EPDM-1 | | 0.2% D | 80 |
| X | EPDM-1 | | 0.5% A | 80 |
| XI | EPDM-1 | | 0.5% B | 80 |
| XII | EPDM-1 | | 0.5% C | 80 |
| XIII | EPDM-1 | | 0.5% D | 80 |
| A | EPDM-1 | 0.1 % Tinuvin 770 | 0.2% A | 480 |
| B | EPDM-1 | 0.1% Tinuvin 770 | 0.2% D | 1035 |
| XIV | EPDM-1 | 0.2% Tinuvin 770 | | 475-490 |
| C | EPDM-1 | 0.2% Tinuvin 770 | 0.2% A | 880 |
| D | EPDM-1 | 0.2% Tinuvin 770 | 0.2% D | 1045 |
| E | EPDM-1 | 0.2% Tinuvin 770 | 0.5% B | 620 |
| F | EPDM-1 | 0.2% Tinuvin 770 | 0.5% C | 870 |
| G | EPDM-1 | 0.2% Tinuvin 770 | 1.0% D | 1790 |

For EPDM-1 there is a synergism between the HALS and the bridges amines A-D

### Comparative (XV-XX) and supporting (H-J) examples (EPDM-2, 4.3% ENB)

| | Polymer | Type and amount HALS | Type and amount bridged amine | Weather resistance (hrs) |
|---|---|---|---|---|
| XV | EPDM-2 | | | 165-170 |
| XVI | EPDM-2 | 0.1 % Tinuvin 770 | | 900 |
| XVII | EPDM-2 | | 0.5% C | 170 |
| XVIII | EPDM-2 | | 0.5% D | 170 |
| H | EPDM-2 | 0.1% Tinuvin 770 | 0.5% C | 1760 |
| I | EPDM-2 | 0.1% Tinuvin 770 | 0.5% D | 1450 |
| XIX | EPDM-2 | 0.2% Tinuvin 770 | | 1190 |
| J | EPDM-2 | 0.2% Tinuvin 770 | 0.5% D | 2225 |
| XX | EPDM-2 | 0.5% Tinuvin 770 | | 2150 |
| H | EPDM-2 | 0.5% Tinuvin 770 | 0.5% C | 3150 |
| I | EPDM-2 | 0.5% Tinuvin 770 | 1.0% C | 3525 |
| J | EPDM-2 | 0.5% Tinuvin 770 | 1.0% D | 3800 |

For EPDM-2 there is a synergism between the HALS and the bridges amines A-D

### Comparative (XXI-XXIII) and supporting (K) examples (EPDM-3, 2% ENB)

| | Polymer | Type and amount HALS | Type and amount bridged amine | Weather resistance (hrs) |
|---|---|---|---|---|
| XXI | EPDM-3 | | | 300 |
| XXII | EPDM-3 | | 0.5% D | 310 |
| XIII | EPDM-3 | 0.1% Tinuvin 770 | | 1150 |
| K | EPDM-3 | 0.1 % Tinuvin 770 | 0.5% D | 1650 |

For EPDM-3 addition of bridged amines result in an increase of weather resistance

### Comparative (XXIV-XXV) and supporting (I-M) examples (EPDM-4; 4.5% DCPD)

| | Polymer | Type and amount HALS | Type and amount bridged amine | Weather resistance (hrs) |
|---|---|---|---|---|
| XXIV | EPDM-4 | | | 75 |
| XXV | EPDM-4 | 0.2% Tinuvin 770 | | 450 |
| L | EPDM-4 | 0.2% Tinuvin 770 | 0.5% C | 1450 |
| M | EPDM-4 | 0.2% Tinuvin 770 | 0.5% D | 800 |

For EPDM-4 addition of bridged amines result in an increase of the weather resistance

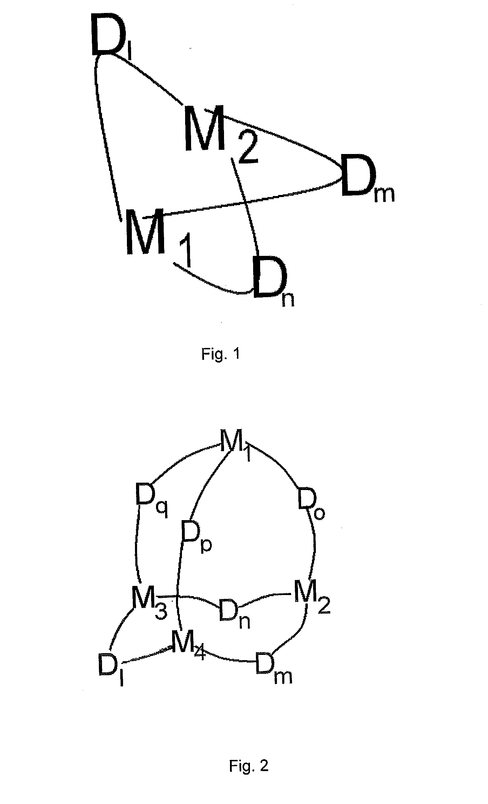

## Claims

1. Composition containing a polymer and at least one hindered-amine light stabilizer (HALS), and a bridged amine compound having at least one N-bridgehead, **characterized in that** the polymer is an ethylene/α-olefin/nonconjugated polyene copolymer rubber a with a build in nonconjugated polyene amount of at least 1 % by weight with respect to the weight of the copolymer.

2. Composition according to claim 1, wherein the nonconjugated polyene is 5-ethylidene-2-norbornene, vinylnorbornene, dicyclopentadiene or combinations thereof.

3. Composition according to claim 1 or 2, wherein the bridged amine compound comprises one of the following structures: 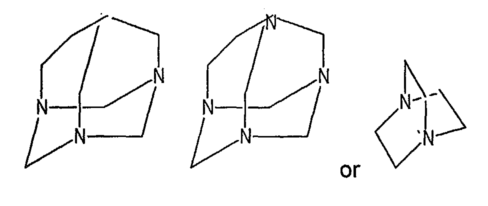 3. Composition according to any of claims 1 - 3, wherein the HALS is chosen from di-(2,2,6,6-tetramethyl-4-piperidyl) sebacate (Tinuvin® 770);
oligomer of N-(2-hydroxyethyl)-2,2,6,6-tetramethyl-4-piperidinol and succinic acid (Tinuvin® 622); bis-(2,2,6,6-tetramethyl-4-piperidinyl) succinate;
bis-(1-octyloxy-2,2,6,6-tetramethyl-4-piperidinyl) sebacate (Tinuvin® 123); bis-(1,2,2,6,6-pentamethyl-4-piperidinyl) sebacate (Tinuvin® 765); N,N'-bis-(2,2,6,6-tetramethyl-4-piperidyl) hexane-1,6-diamine (Chimassorb® T5);
poly((6-morpholine-S-triazine-2,4-diyl)(2,2,6,6-tetramethyl-4-piperidinyl)-iminohexamethylene-(2,2,6,6-tetramethyl-4-piperidinyl)-imino) (Cyasorb® UV 3346);
5-(2,2,6,6-tetramethyl-4-piperidinyl)-2-cycloundecyloxazole) (Hostavin® N20); 8-acetyl-3-dodecyl-7,7,9,9-tetramethyl-1,3,8-triazaspiro(4,5)decane-2,4-dione; polymethylpropyl-3-oxy[4(2,2,6,6-tetramethyl)piperidinyl)siloxane (Uvasil® 299);
copolymer of α-methylstyrene-N-(2,2,6,6-tetramethyl-4-piperidinyl)maleimide and N-stearylmaleimide; 1,2,3,4-butanetetracarboxylic acid, polymer with beta, beta, beta',beta'-tetramethyl-2,4,8,10-tetraoxaspiro[5.5]undecane-3,9-diethanol, 1,2,2,6,6-pentamethyl-4-piperidinyl ester (Mark® LA63)
2,4,8,10-tetraoxaspiro[5.5]undecane-3,9-diethanol,beta,beta,beta',beta'-tetramethyl-, polymer with 1,2,3,4-butanetetracarboxylic acid, 2,2,6,6-tetramethyl-4-piperidinyl ester (Mark^{R} LA68) oligomer of 7-oxa-3,20-diazadispiro[5.1.11.2]heneicosan-21-one,2,2,4,4-tetramethyl-20-(oxiranylmethyl) (Hostavin® N30)
formamide, N,N'-1,6-hexanediylbis[N-(2,2,6,6-tetramethyl-4-piperidinyl (Uvinul® 4050H).
1,3,5-triazine-2,4,6-triamine, N,N'''-[1,2-ethanediylbis [[[4,6-bis[butyl(1,2,2,6,6-pentamethyl-4-iperidinyl)amino]-1,3,5-triazine-2-yl]imino]-3,1-propanediyl]]-bis[N',N''-dibutyl-N',N''-bis(1,2,2,6,6-pentamethyl-4-piperidinyl) (Chimassorb® 119)
1,5-dioxaspiro (5,5) undecane 3,3-dicarboxylic acid, bis (2,2,6,6-tetramethyl-4-peridinyl) ester (Cyasorb® UV-500)
1,5-dioxaspiro (5,5) undecane 3,3-dicarboxylic acid, bis (1,2,2,6,6-pentamethyl-4-peridinyl) ester (Cyasorb^{R} UV-516)
4-acryloyloxy-1,2,2,6,6-pentamethyl-4-piperidine;
1,3-benzendicarboxamide,N,N'-bis(2,2,6,6-tetramethyl-4-piperidinyl) (Nylostab® S-EED)
1,3-Propanediamine, N,N-1,2-ethanediylbis-,polymer with 2,4,6-trichloro-1,3,5-triazine, reaction products with N-butyl-2,2,6,6-tetramethyl-4-piperidinamine (Uvasorb® HA88)
1,1'-(1,2-ethane-di-yl)-bis-(3,3',5,5'-tetra-methyl-piperazinone) (Good-rite@ 3034)
1,1',1''-(1,3,5-triazine-2,4,6-triyltris ((cyclohexylimino)-2,1-ethanediyl)tris(3,3,5,5-tetramethylpiperazinone); (Good-rite® 3150)
1,1',1''-(1,3,5-triazine-2,4,6-triyltris((cyclohexylimino)-2,1-ethanediyl)tris(3,3,4,5,5-tetramethylpiperazinone) (Good-rite® 3159)
1,2,3,4-Butanetetracarboxylic acid, tetrakis(2,2,6,6-tetramethyl-4-piperidinyl) ester (ADK STAB® LA-57) 1,2,3,4-Butane-tetra-carboxyllc acid, 1,2,3-tris-(1,2,2,6,6-penta-methyl-4-piperidyl)-4-tridecylester (ADK STAB@ LA-62) Mixture of esters of 2,2,6,6-tetra-methyl-4-pipiridinol and several fatty acid (CYASORB® UV3853)
Propanedioic acid, [(4-methoxyphenyl)methylene]-,bis(2,2,6,6-tetramethyl-4-piperidinyl) ester (HOSTAVIN® PR-31)
3-Dodecyl-1-(2,2,6,6-tetramethyl-4-piperidyl)-pyrrolidin-2,5-dione (CYASORB® UV3581)
3-Dodecyl-1-(1,2,2,6,6-pentamethyl-4-piperidyl)-pyrrolidin-2,5-dione (CYASORB® UV3641)
1,2,3,4-Butanetetracarboxylic acid, tetrakis(1,2,2,6,6-pentamethyl-4-piperidinyl)ester (ADK STAB® LA-52)
1,2,3,4-Butane-tetra-carboxyllc acid, 1,2,3-tris-(2,2,6,6-tetra-methyl-4-piperidyl)-4-tridecylester (ADK STAB® LA-67)
Mixture of: 2,2,4,4 tetramethyl-21-oxo-7-oxa-3.20-diazadispiro[5.1.11.2]-heneicosane-20-propionic acid dodecylester and 2,2,4,4 tetramethyl-21-oxo-7-oxa-3.20-diazadispiro[5.1.11.2]-heneicosane-20-propionicacid tetradecylester (Hostavin® N24)
Poly[[6-[(1,1,3,3-tetramethylbutyl)amino]-s-triazine-2,4-diyl][2,2,6,6-tetramethyl-4-piperidinyl)-imino]hexamethylene [(2,2,6,6-tetramethyl-4-piperidinyl) imino]]} (Chimassorb® 944);
1,3,5-Triazine-2,4,6-triamine, N,N"'-[1,2-ethanediylbis [[[4,6-bis[butyl(1,2,2,6,6-pentamethyl-4-piperidinyl)amino]-1,3,5-triazine-2-yl]imino]-3,1-propanediyl]]-bis[N',N''-dibutyl-N',N''-bis(1,2,2,6,6-pentamethyl-4-piperidinyl) (Chimassorb® 119);
Poly[(6-morpholino-s-triazine-2,4-diyl)[1,2,2,6,6-penta-methyl-4-piperidyl)imino]-hexamethylene[(1,2,2,6,6 penta-methyl-4-piperidyl)imino]]1,6-Hexanediamine, N,N'-bis(1,2,2,6,6-pentamethyl-4-pipiridinyl)-, Polymers with morpholine-2,4,6-trichloro- 1,3,5-triazine (CYASORB® UV3529) 1,6-Hexanediamine, N, N'-bis(2,2,6,6-tetramethyl-4piperidinyl)-polymer with 2,4,6-trichloro-1,3,5-triazine, reaction products with N-butyl-1-butanamine and N-butyl-2,2,6,6-tetramethyl-4-piperidinamine (Chimassorb® 2020)
Reaction products of N, N'-ethane -1,2-diylbis (1,3-propanediamine), cyclohexane, peroxidized 4-butylamino-2,2,6,6-tetramethylpiperidine and 2,4,6-trichloro-1,3,5- triazine (Flamestab NOR@ 116)
1,6-hexanediamine, N,N'-bis(2,2,6,6-tetramethyl-4-piperidinyl)-, polymer with 2,4,6- trichloro-1,3,5-triazine, reaction products with 3-bromo-1-propene, n-butyl-1- butanamine and N-butyl-2,2,6,6-tetramethyl-4-piperidinamine, oxidised, hydrogenated (Tinuvin NOR® 371)

4. Composition according to Claim 1, wherein the ratio of the bridged amine compound having at least one N-bridgehead and the HALS lies between 1:5 (m:m) and 5:1 (m:m).

5. Composition according to Claim 1 or Claim 2 in which the amine compound having at least one N-bridgehead is present in an amount, relative to the total amount of polymer in the plastics composition, of between 0.1 and 2.5% by weight.

6. Composition according to any of the claims 1- 5, further comprising treated or untreated whitings, talcum, silicas, silicates, mica, or one or more clays.

7. Process for the preparation of a cured composition according any of claim 1 - 6, wherein a peroxide is used as a curing agent.
